# EUROPÄISCHE PATENTSCHRIFT

(11) **EP 4 607 048 B1**
(45) Veröffentlichungstag und Bekanntmachung des Hinweises auf die Patenterteilung: **30.09.2026**
(21) Anmeldenummer: 22962290.7
(22) Anmeldetag: 17.10.2022
(51) Int. Cl.: F16C 33/58, F16C 33/60

(54) **LAGERRING UND WÄLZLAGER**
BEARING RING AND ROLLING BEARING
BAGUE DE ROULEMENT ET PALIER À ROULEMENT

(43) Veröffentlichungstag der Anmeldung: 27.08.2025
(73) Patentinhaber: Schaeffler Technologies AG & Co. KG, 91074 Herzogenaurach (DE)
(72) Erfinder: HUO, Hua, Shanghai 201804 (CN); WANG, Weihua, Shanghai 201804 (CN); CHENG, Tao, Shanghai 201804 (CN); SI, Dechun, Shanghai 201804 (CN)
(74) Vertreter: Schaeffler Technologies
(86) Internationale Anmeldenummer: PCT/CN2022/125674
(87) Internationale Veröffentlichungsnummer: WO 2024/082092

(56) Entgegenhaltungen:
- CN-U- 206 668 763
- CN-U- 213 511 671
- CN-U- 215 370 633
- CN-U- 215 370 633
- DE-A1- 102013 226 748
- GB-A- 1 227 832
- GB-A- 1 411 848
- JP-A- 2004 332 852
- US-A- 1 644 611
- US-A1- 2006 204 159

## Beschreibung

### Gebiet

Die vorliegende Anmeldung betrifft ein Wälzlager. Insbesondere betrifft die vorliegende Anmeldung einen Lagerring für ein Wälzlager.

### Hintergrund

Wenn im Bergbau, in der Zementindustrie oder in anderen Industriezweigen große Geräte wie ein Hebezeug oder ein Bandförderer wegen eines Lagerschadens zur Wartung abgeschaltet werden müssen, ist die Demontage des alten Lagers und der Austausch durch ein neues zeitaufwändig, was zu großen Produktionsausfällen führt. Bei Verwendung eines geteilten Lagers, wie zum Beispiel aus CN 215 370 633 U bekannt, kann der für die Demontage und den Austausch erforderliche Wartungszeitaufwand reduziert werden.

Das geteilte Lager besteht aus einem in zwei Hälften geteilten Lagerinnenring und einem in zwei Hälften geteilten Lageraußenring. So ist es beispielsweise möglich, bei einem Lager mit ungeteilter Struktur den Innen- und Außenring jeweils in zwei Teile zu zerschneiden. Die beiden Teile des Außenrings können direkt an den Teilungsstellen durch Bolzen miteinander verbunden werden. Eine direkte Verbindung und Befestigung der beiden Teile des Innenrings durch Bolzen ist allerdings nicht möglich. Bei einem bestehenden Befestigungsverfahren kann die axiale Breite des Innenrings des Lagers erweitert werden, sodass der Innenring breiter als der Außenring ist und an seinem erweiterten Abschnitt durch einen Sicherungsring verriegelt werden kann. In diesem Fall kann das geteilte Lager die Tragfähigkeit weitgehend aufrechterhalten, hat jedoch einen eingeschränkten Anwendungsbereich, da im Vergleich zu einem Lager mit ungeteilter Struktur die umgebende Struktur geändert werden muss, da der Innenring breiter als der Außenring ist. Bei einem anderen bestehenden Befestigungsverfahren kann die Größe des Wälzkörpers im geteilten Lager reduziert werden, um die Verbindung und Befestigung der geteilten Teile des Innenrings zu realisieren, ohne die Breite des Innenrings im Verhältnis zum Lager mit der ungeteilten Struktur zu verändern. In diesem Fall verringern sich Tragfähigkeit und Lebensdauer des geteilten Lagers im Vergleich zu einem Lager mit ungeteilter Struktur deutlich.

Daher besteht der Wunsch, ein Wälzlager und einen Lagerring mit geteilter Struktur bereitzustellen, die die Verbindungsleistung verbessern können.

### Kurzdarstellung

Eine Aufgabe der vorliegenden Anmeldung besteht darin, ein Wälzlager und einen Lagerring für ein Wälzlager mit geteilter Struktur bereitzustellen, wodurch die Verbindungsleistung verbessert werden kann. Eine weitere Aufgabe der vorliegenden Anmeldung besteht darin, ein Wälzlager und einen Lagerring mit geteilter Struktur bereitzustellen, die Größe und Tragfähigkeit ausgleichen können. Eine weitere Aufgabe der vorliegenden Anmeldung besteht darin, ein Wälzlager und einen Lagerring mit geteilter Struktur bereitzustellen, die die axiale Breite des Lagers nicht verändern. Eine weitere Aufgabe der vorliegenden Anmeldung besteht darin, ein Wälzlager und einen Lagerring mit geteilter Struktur bereitzustellen, die die Tragfähigkeit des Lagers aufrechterhalten können.

In einem Aspekt der vorliegenden Anmeldung wird ein Lagerring bereitgestellt, der mehrere Lagerringsektionen, mehrere Verbindungsstücke und mehrere Bolzen einschließt. Die mehreren Lagerringsektionen sind konfiguriert, um zu einem Ring verbunden zu werden. Jede Lageringsektion schließt ein: Verbindungsabschnitte, die sich an einer axialen Endoberfläche der Lageringsektion befinden und angrenzend Umfangsendoberflächen der Lageringsektion sind; und mindestens ein Befestigungsloch, das sich an jedem Verbindungsabschnitt befindet und sich von dem Verbindungsabschnitt erstreckt. Jedes Verbindungsstück schließt mehrere Durchgangslöcher ein. Jedes Verbindungsstück ist konfiguriert, um an den benachbarten Verbindungsabschnitten zweier angrenzender Lagerringsektionen angeordnet zu sein, wenn die mehreren Lagerringsektionen zusammengebaut sind, sodass die mehreren Durchgangslöcher des Verbindungsstücks den Befestigungslöchern der beiden benachbarten Lagerringsektionen entsprechen. Jedes Durchgangsloch und das entsprechende Befestigungsloch erstrecken sich schräg in Bezug auf eine axiale Richtung des Lagerrings, und jeder Bolzen ist konfiguriert, um in ein Durchgangsloch des Verbindungsstücks und das entsprechende Befestigungsloch der Lagerringsektionen eingesetzt zu werden, wodurch die mehreren Lagerringsektionen miteinander verbunden werden. Somit wird gemäß den Ausführungsformen der vorliegenden Anmeldung ein Lagerring mit geteilter Struktur bereitgestellt, bei dem die Lagerringsektionen durch die Verbindungsstücke und Bolzen an der axialen Endoberfläche des Lagerrings verbunden und befestigt sind. Daher kann der Lagerring mit der geteilten Struktur gemäß den Ausführungsformen der vorliegenden Anmeldung schnell montiert oder demontiert werden, ohne dass die Tragfähigkeit beeinträchtigt wird. Indem das Befestigungsloch der Lageringsektion in Bezug auf die axiale Richtung des Lagerrings geneigt gestaltet wird, kann der Bolzen schräg in das Befestigungsloch eingesetzt werden und eine bessere Scherfestigkeit bereitstellen, wenn die Innenringsektionen verbunden werden.

Gemäß einigen Ausführungsformen der vorliegenden Anmeldung ist jeder Verbindungsabschnitt jeder Lageringsektion als eine Verbindungsnut ausgeführt, die von der axialen Endoberfläche der Lageringsektion vertieft ist, und jedes Verbindungsstück ist konfiguriert, um in den benachbarten Verbindungsnuten der beiden benachbarten Lagerringsektionen angeordnet zu werden. Durch Anordnen des Verbindungsstücks in den vertieften Verbindungsnuten kann der Lagerring mit der geteilten Struktur gemäß den Ausführungsformen der vorliegenden Anmeldung schnell montiert oder demontiert werden, ohne die Breite des Lagerrings zu vergrößern, wodurch ein breiterer Anwendungsbereich bei der Installation bereitgestellt wird.

Gemäß einigen Ausführungsformen der vorliegenden Anmeldung ist jedes Befestigungsloch der Lageringsektion konfiguriert, sich schräg von der entsprechenden Verbindungsnut in eine Richtung zu erstrecken, die sich allmählich von der entsprechenden Umfangsendoberfläche der Lageringsektion entfernt. Indem die Befestigungslöcher an den benachbarten Verbindungsnuten der beiden verbundenen Lagerringsektionen konfiguriert sind, um sich schräg in einer Richtung zu erstrecken, die sich allmählich von den Umfangsendoberflächen der Lagerringsektionen entfernt, können die in den Befestigungslöchern angeordneten Bolzen beim Verbinden der Lagerringsektionen eine größere Vorspannkraft bereitstellen.

Gemäß einigen Ausführungsformen der vorliegenden Anmeldung ist jede Verbindungsnut der Lageringsektion bogenförmig, und jedes Verbindungsstück ist bogenförmig. Durch bogenförmiges Ausgestalten der Verbindungsnuten und Verbindungsstücke können mehr Bolzen an den benachbarten Verbindungsnuten der beiden Lagerringsektionen angeordnet werden, wodurch sich die Anforderungen an die Auswahl der Bolzen verringern.

Gemäß einigen Ausführungsformen der vorliegenden Anmeldung schließt der Lagerring ferner einen Verriegelungsstift ein, der konfiguriert ist, um mit dem Bolzen verbunden zu werden. Das Verbindungsstück schließt eine mit seinem Durchgangsloch in Verbindung stehende Verriegelungsnut ein, und der Verriegelungsstift ist derart konfiguriert, dass beim Einsetzen des mit dem Verriegelungsstift verbundenen Bolzens in ein Durchgangsloch des Verbindungsstücks und die entsprechenden Befestigungslöcher der Lagerringsektionen mindestens ein Verriegelungsstift gebogen und mindestens teilweise in der Verriegelungsnut des Verbindungsstücks aufgenommen wird. Durch Bereitstellen einer Verriegelungsstruktur, die den Verriegelungsstift einschließt, kann verhindert werden, dass sich der Bolzen löst und die Installation und den Betrieb des Innenrings beeinträchtigt, nachdem die Innenringsektionen des Innenrings zusammengebaut wurden.

Gemäß einigen Ausführungsformen der vorliegenden Anmeldung schließt der Bolzen eine an einem Kopf des Bolzens angeordnete und sich in einer axialen Richtung des Bolzens erstreckende Montagenut ein, und der Verriegelungsstift ist konfiguriert, um lösbar in der Montagenut des Bolzens verbunden zu werden. Durch Bereitstellen der Montagenut für den Verriegelungsstift am Kopf des Bolzens kann der Verriegelungsstift lösbar verbunden werden, um eine schnelle Installation und Demontage zu ermöglichen.

Gemäß einigen Ausführungsformen der vorliegenden Anmeldung weisen die und der Verriegelungsstift aufeinander abgestimmte Keilformen auf, und die Keilform der Montagenut ist konfiguriert, um zu verhindern, dass sich der Verriegelungsstift in axialer Richtung des Bolzens von dem Verbindungsstück wegbewegt. Durch den keilförmigen Verriegelungsstift und die Verriegelungsnut lässt sich der Verriegelungsstift leicht installieren, was die Installationseffizienz verbessert.

Gemäß einigen Ausführungsformen der vorliegenden Anmeldung schließt der Lagerring zwei Lagerringsektionen und zwei Verbindungsstücke ein.

In einem weiteren Aspekt der vorliegenden Anmeldung wird ein Wälzlager bereitgestellt, das den Lagerring gemäß den Ausführungsformen der vorliegenden Anmeldung einschließt.

Gemäß einigen Ausführungsformen der vorliegenden Anmeldung ist der Lagerring ein Innenring des Wälzlagers.

### Kurzbeschreibung der Zeichnungen

FIG. 1 ist eine schematische Ansicht eines Wälzlagers gemäß einigen Ausführungsformen der vorliegenden Anmeldung.
FIG. 2 ist eine schematische Ansicht eines Lagerrings gemäß einigen Ausführungsformen der vorliegenden Anmeldung.
FIG. 3 ist eine schematische Draufsicht eines Lagerrings gemäß einigen Ausführungsformen der vorliegenden Anmeldung.
FIG. 4 ist eine schematische vergrößerte Teilansicht eines Teils A in FIG. 2.
FIG. 5 ist eine schematische Schnittansicht entlang einer Linie B-B in FIG. 2.
FIG. 6 ist eine schematische Ansicht eines Verbindungsstücks gemäß einigen Ausführungsformen der vorliegenden Anmeldung.
FIG. 7 ist eine schematische Schnittansicht entlang einer Linie D-D in FIG. 6.
FIG. 8 ist eine schematische vergrößerte Teilansicht eines Teils C in FIG. 6.
FIG. 9 ist eine schematische Seitenansicht eines Bolzens gemäß einigen Ausführungsformen der vorliegenden Anmeldung.
FIG. 10 ist eine schematische Ansicht eines Bolzens von unten gemäß einigen Ausführungsformen der vorliegenden Anmeldung.
FIG. 11 ist eine schematische Ansicht eines Verriegelungsstifts gemäß einigen Ausführungsformen der vorliegenden Anmeldung.

### Ausführliche Beschreibung der Ausführungsformen

Nachfolgend werden hierin beispielhafte Ausführungsformen der vorliegenden Anmeldung unter Bezugnahme auf die beigefügten Zeichnungen beschrieben. Die folgende ausführliche Beschreibung und die beiliegenden Zeichnungen werden verwendet, um das Prinzip der vorliegenden Anmeldung beispielhaft zu veranschaulichen. Die vorliegende Anmeldung ist nicht auf die beschriebenen bevorzugten Ausführungsformen beschränkt, und der Schutzumfang der vorliegenden Anmeldung ist durch die Ansprüche definiert. Die vorliegende Anmeldung wird nun anhand der beispielhaften Ausführungsformen ausführlich beschrieben, von denen einige in den beigefügten Zeichnungen veranschaulicht sind. Die folgende Beschreibung erfolgt unter Bezugnahme auf die beigefügten Zeichnungen, und dieselben Bezugszeichen in verschiedenen beigefügten Zeichnungen bezeichnen dieselben oder ähnliche Elemente, sofern nicht anders angegeben. Die in den nachfolgenden beispielhaften Ausführungsformen beschriebenen Lösungen stellen nicht alle Lösungen der vorliegenden Anmeldung dar. Vielmehr sind diese Lösungen lediglich Beispiele für Systeme und Verfahren der verschiedenen Aspekte der vorliegenden Anmeldung, auf die sich die beigefügten Ansprüche beziehen.

Es werden ein Wälzlager und ein Lagerring mit geteilter Struktur bereitgestellt. Nachfolgend werden die beispielhaften Ausführungsformen der vorliegenden Anmeldung unter Bezugnahme auf die beigefügten Zeichnungen beschrieben. Es Sollte beachtet werden, dass in den beigefügten Zeichnungen nur einige der Ausführungsformen der vorliegenden Anmeldung gezeigt sind und dass der Schutzumfang der vorliegenden Anmeldung gemäß den Ansprüchen bestimmt wird.

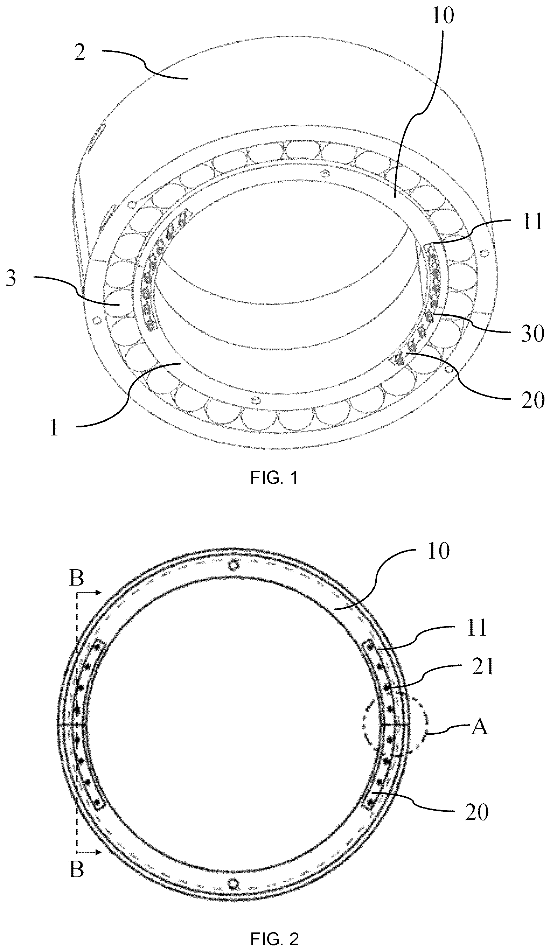

FIG. 1 ist eine schematische Ansicht eines Wälzlagers gemäß einigen Ausführungsformen der vorliegenden Anmeldung. Wie in FIG. 1 gezeigt, schließt das Wälzlager einen Innenring 1, einen Außenring 2 und mehrere Wälzkörper 3 ein. Der Außenring 2 kann einen radialen Innenlaufring einschließen, der sich auf seiner radialen Innenoberfläche befindet. Der Innenring 1 kann einen radialen Außenlaufring einschließen, der sich auf seiner radialen Außenoberfläche befindet. Die Wälzkörper 3 können zwischen dem radialen Innenlaufring und dem radialen Außenlaufring rollen. Beispielsweise weist der Innenring 1 gemäß den Ausführungsformen der vorliegenden Anmeldung eine geteilte Struktur auf, das heißt, er dient als der in der vorliegenden Anmeldung beanspruchte Lagerring. Die vorliegende Anmeldung ist jedoch nicht darauf beschränkt. Der Außenring 2 kann gemäß den Ausführungsformen der vorliegenden Anmeldung auch eine geteilte Struktur aufweisen, das heißt, er dient als der in der vorliegenden Anmeldung beanspruchte Lagerring. Wenn der Außenring 2 eine geteilte Struktur annimmt, kann er durch das gemäß der vorliegenden Anmeldung bereitgestellte Verbindungsverfahren oder durch ein beliebiges anderes bestehendes Verbindungsverfahren verbunden und befestigt werden. Beispielsweise können die beiden Teile des Außenrings direkt miteinander verbunden und durch Bolzen auf der radialen Außenseite des Außenrings befestigt werden.

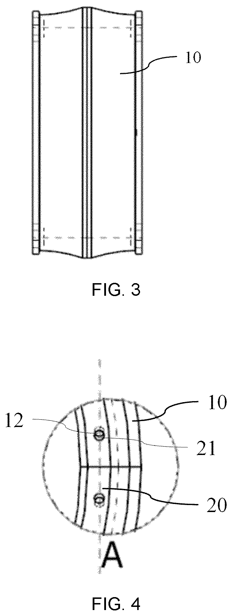

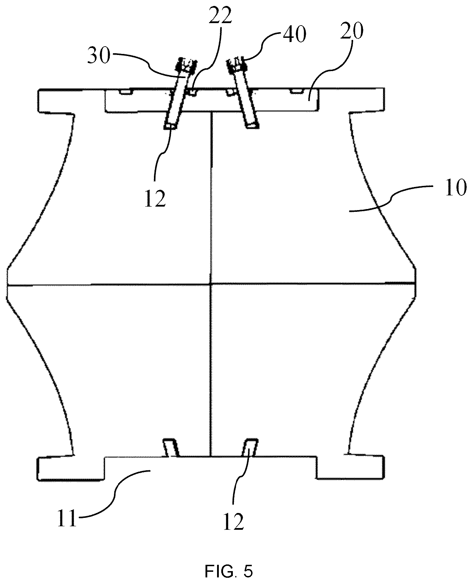

FIG. 2 ist eine schematische Ansicht eines Lagerrings gemäß einigen Ausführungsformen der vorliegenden Anmeldung. FIG. 3 ist eine schematische Draufsicht eines Lagerrings gemäß einigen Ausführungsformen der vorliegenden Anmeldung. FIG. 4 ist eine schematische vergrößerte Teilansicht eines Teils A in FIG. 2. FIG. 5 ist eine schematische Schnittansicht entlang einer Linie B-B in FIG. 2.

Gemäß einigen Ausführungsformen der vorliegenden Anmeldung, wie in FIG. 2 gezeigt, schließt der Innenring 1 zwei Innenringsektionen 10 ein. Beispielsweise können die Innenringsektionen 10 jeweils als die in der vorliegenden Anmeldung beanspruchten Lagerringsektionen dienen. Die beiden Innenringsektionen 10 können zu einem Ring zusammengesetzt werden. Jede Innenringsektion 10 weist in axialer Richtung betrachtet eine ungefähre Bogenform auf, wie in FIG. 2 gezeigt. Jede Innenringsektion 10 weist zwei Umfangsendoberflächen und zwei axiale Endoberflächen auf. Werden zwei Innenringsektionen 10 zu einem Ring zusammengesetzt, sind ihre Umfangsendoberflächen jeweils einander zugewandt. In einigen Ausführungsformen können die Innenringsektionen 10 beispielsweise durch Schneiden aus einem vollständigen ringförmigen Innenring gebildet werden. In einer beispielhaften Ausführungsform weisen mehrere Innenringsektionen 10 die gleiche Form auf. Die vorliegende Anmeldung ist jedoch nicht darauf beschränkt. In einigen Ausführungsformen können mehrere Innenringsektionen 10 unterschiedliche Formen aufweisen, z. B. unterschiedliche Radianten oder dergleichen, wenn sie in axialer Richtung der Innenringsektionen betrachtet werden. In dieser Patentschrift ist die axiale Richtung des Innenrings dieselbe wie die der Innenringsektion, und die Umfangsrichtung des Innenrings ist dieselbe wie die Umfangsrichtung der Innenringsektion.

Gemäß einigen Ausführungsformen der vorliegenden Anmeldung weist die Innenringsektion 10 einen Verbindungsabschnitt auf, der sich an ihrer axialen Endoberfläche und benachbart zu ihrer Umfangsendoberfläche befindet. Der Verbindungsabschnitt ist zum Verbinden der Innenringsektionen 10 konfiguriert. In einer beispielhaften Ausführungsform ist der Verbindungsabschnitt der Innenringsektionen 10 als Verbindungsnut 11 implementiert. Die Verbindungsnut 11 ist von der axialen Endoberfläche der Innenringsektion 10 vertieft. In einigen Ausführungsformen ist die Innenringsektion 10 an ihrer axialen Endoberfläche, vorzugsweise an jeder axialen Endoberfläche, mit zwei Verbindungsnuten 11 versehen. Die beiden Verbindungsnuten 11 können in Umfangsrichtung der Innenringsektion 10 beabstandet sein und jeweils benachbart zu den Umfangsendoberflächen der Innenringsektion 10 sein. In einer beispielhaften Ausführungsform ist die Verbindungsnut 11 in axialer Richtung der Innenringsektion 10 betrachtet bogenförmig.

Gemäß einigen Ausführungsformen der vorliegenden Anmeldung weist die Innenringsektion 10 ferner ein oder mehrere Befestigungslöcher 12 auf, die sich in der Verbindungsnut 11 befinden und sich von der Verbindungsnut 11 erstrecken. In einigen Ausführungsformen schließt die Innenringsektion 10 mehrere Befestigungslöcher 12 ein, die voneinander beabstandet und gleichmäßig verteilt sind. In einigen Ausführungsformen weist die Innenringsektion 10 mehrere Befestigungslöcher 12 auf, die voneinander beabstandet und in einem Bogen verteilt sind, wenn sie in axialer Richtung der Innenringsektion 10 betrachtet werden. In einigen Ausführungsformen sind, wenn die beiden Innenringsektionen 10 aneinander montiert sind, die benachbarten Befestigungslöcher 12 der beiden Innenringsektionen 10 voneinander beabstandet und in einem Bogen verteilt.

Gemäß einigen Ausführungsformen der vorliegenden Anmeldung, wie in FIG. 2 gezeigt, schließt der Innenring 1 ferner zwei Verbindungsstücke 20 und mehrere Bolzen 30 zum Verbinden und Befestigen der Innenringsektionen 10 ein.

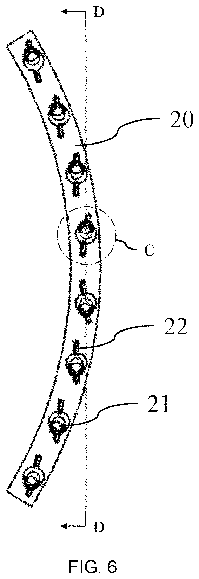

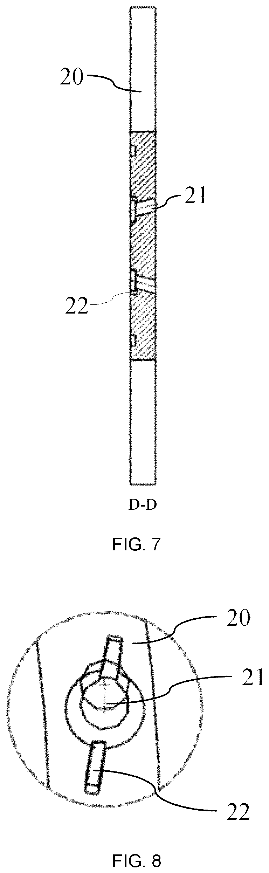

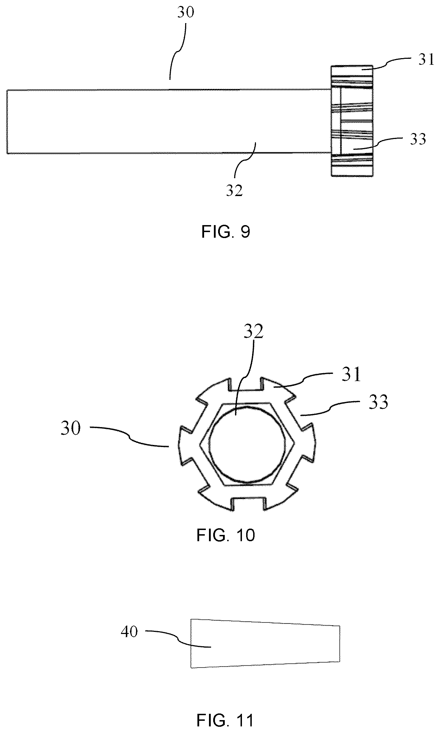

FIG. 6 ist eine schematische Ansicht eines Verbindungsstücks gemäß einigen Ausführungsformen der vorliegenden Anmeldung. FIG. 7 ist eine schematische Schnittansicht entlang einer Linie D-D in FIG. 6. FIG. 8 ist eine schematische vergrößerte Teilansicht eines Teils C in FIG. 7. FIG. 9 ist eine schematische Seitenansicht eines Bolzens gemäß einigen Ausführungsformen der vorliegenden Anmeldung. FIG. 10 ist eine schematische Ansicht eines Bolzens von unten gemäß einigen Ausführungsformen der vorliegenden Anmeldung.

In einer beispielhaften Ausführungsform ist das Verbindungsstück 20 bogenförmig, d. h., es weist eine ungefähre Bogenform auf, wie in FIG. 7 gezeigt. In einigen Ausführungsformen schließt der Bolzen 30 einen Kopf 31 und einen Schaftabschnitt 32 ein, wie in FIG. 9 gezeigt. Wenn die beiden Innenringsektionen 10 zusammengebaut werden, wie in den FIG. 2 und 5 gezeigt, kann jedes Verbindungsstück 20 in den benachbarten Verbindungsnuten 11 der beiden Innenringsektionen 10 platziert werden.

Gemäß einigen Ausführungsformen der vorliegenden Anmeldung schließt das Verbindungsstück 20 mehrere Durchgangslöcher 21 ein, wie in FIG. 6 gezeigt. Wenn die beiden Innenringsektionen 10 zusammengebaut sind und jedes Verbindungsstück 20 in den beiden benachbarten Verbindungsnuten 11 platziert ist, entsprechen die mehreren Durchgangslöcher 21 des Verbindungsstücks 20 jeweils den Befestigungslöchern 12 der beiden Innenringsektionen 10, wenn sie in axialer Richtung des Innenrings 1 betrachtet werden, wie in FIG. 5 gezeigt. Somit kann der Bolzen 30 nacheinander in das Durchgangsloch 21 des Verbindungsstücks 20 und in das Befestigungsloch 12 der Innenringsektion 10 eingesetzt werden. Die Größe und Anzahl der Befestigungslöcher 12 und der Durchgangslöcher 21 können entsprechend der Größe, Art usw. des Lagers bestimmt werden. Wenn zwei Innenringsektionen 10 aneinander montiert werden, können mehrere Bolzen 30 ein Verbindungsstück 20 mit den beiden Innenringsektionen 10 an den benachbarten Verbindungsnuten 11 (d. h. einer Verbindungsstelle) der beiden Innenringsektionen 10 verbinden, wie in FIG. 1 gezeigt. Wenn zwei Innenringsektionen 10 jeweils an zwei Verbindungsstellen durch zwei Verbindungsstücke 20 und mehrere Bolzen 30 verbunden werden, wird der Innenring 1 verbunden und befestigt.

Durch Ausgestalten der Verbindungsnuten 11 und der Verbindungsstücke 20 in der Bogenform können mehr Bolzen 30 an den angrenzenden Verbindungsnuten 11 der beiden Innenringsektionen 10 angeordnet werden, wodurch sich die Anforderungen an die Auswahl der Bolzen verringern. Durch bogenförmiges Verteilen der mehreren Befestigungslöcher 12 kann die auf die mehreren Bolzen 30 ausgeübte Kraft gleichmäßiger sein, wodurch die Lebensdauer und die Vorspannkraft des Innenrings 1 erhöht werden. Der Durchmesser und die Länge des Bolzens 30 können entsprechend der Größe, Art usw. des Lagers bestimmt werden.

In einigen Ausführungsformen besteht ein vorbestimmter Abstand zwischen den angrenzenden Umfangsendoberflächen der beiden verbundenen Innenringsektionen 10 des Innenrings 1. In einigen Ausführungsformen kann eine Klemmhülse verwendet werden, um die Innenringsektionen 10 von der radialen Außenseite her zurückzuhalten, sodass zwischen den benachbarten Umfangsendoberflächen der Innenringsektionen 10 der vorbestimmte Abstand besteht, und dann können die Verbindungsstücke 20 und Bolzen 30 verwendet werden, um die Innenringsektionen 10 miteinander zu verbinden und zu befestigen. Durch Bereitstellen des vorbestimmten Abstands zwischen den angrenzenden Umfangsendoberflächen der Innenringsektionen 10 des Innenrings 1 kann eine Vorspannkraft im Innenring 1 bereitgestellt werden, um eine Presspassung mit einer Komponente wie etwa einer Welle zu erreichen.

In einer beispielhaften Ausführungsform sind das Befestigungsloch 12 und das entsprechende Durchgangsloch 21 konfiguriert, um sich in Bezug auf die axiale Richtung des Innenrings 1 schräg zu erstrecken. Indem das Befestigungsloch 12 der Innenringsektion 10 und das Durchgangsloch 21 des Verbindungsstücks 20 so gestaltet sind, dass sie in Bezug auf die axiale Richtung des Innenrings 1 abgewinkelt sind, kann der Bolzen 30 schräg in das Durchgangsloch 21 und das Befestigungsloch 12 eingesetzt werden, was eine bessere Scherfestigkeit bereitstellt, wenn die Innenringsektionen 10 verbunden sind. In einigen Ausführungsformen, wie in FIG. 5 gezeigt, erstreckt sich das Befestigungsloch 12 schräg von der Verbindungsnut 11 in einer Richtung, die sich allmählich von der Umfangsendoberfläche der Innenringsektion 10 entfernt. In diesem Fall erstreckt sich, wie in FIG. 7 gezeigt, das Durchgangsloch 21 schräg von der der Verbindungsnut 11 abgewandten Oberfläche des Verbindungsstücks 20 in einer Richtung, die sich allmählich von der Umfangsendoberfläche der Innenringsektion 10 entfernt. Dies führt dazu, dass an den benachbart Verbindungsnuten 11 der beiden Innenringsektionen 10 der an einer der Innenringsektionen 10 angeordnete Bolzen 30 in Richtung der anderen der Innenringsektionen 10 geneigt ist, das heißt, dass der Kopf 31 des an einer der Innenringsektionen 10 angeordneten Bolzens 30 näher an der anderen der Innenringsektionen 10 liegt als der Schaftabschnitt 32 des Bolzens 30 und umgekehrt. Somit kann der Bolzen 30 eine größere Vorspannkraft bereitstellen, wenn die Innenringsektionen 10 verbunden werden. Der Neigungswinkel des Befestigungslochs 12 kann entsprechend der Größe, Art usw. des Lagers bestimmt werden.

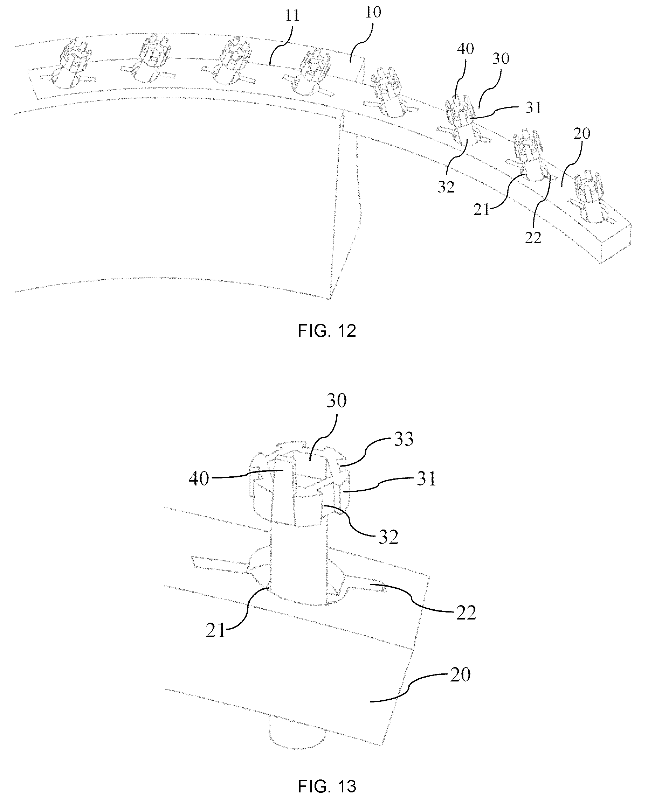

Um zu verhindern, dass sich der Bolzen 30 löst und dadurch die Installation und Funktion des Innenrings 1 beeinträchtigt, nachdem die Innenringsektionen 10 des Innenrings 1 zusammengebaut wurden, kann gemäß der vorliegenden Anmeldung ferner eine Verriegelungsstruktur bereitgestellt sein. FIG. 11 ist eine schematische Ansicht eines Verriegelungsstifts gemäß einigen Ausführungsformen der vorliegenden Anmeldung. FIG. 12 ist eine schematische Ansicht eines Teils eines Innenrings gemäß einigen Ausführungsformen der vorliegenden Anmeldung. FIG. 13 ist eine schematische Ansicht eines Bolzens und eines Verriegelungsstifts gemäß einigen Ausführungsformen der vorliegenden Anmeldung.

Gemäß einigen Ausführungsformen der vorliegenden Anmeldung schließt der Innenring 1 ferner einen Verriegelungsstift 40 ein. Der Verriegelungsstift 40 ist konfiguriert, um mit dem Bolzen 30 verbunden zu werden, um die Drehung des Bolzens 30 einzuschränken. In einigen Ausführungsformen ist der Verriegelungsstift 40 konfiguriert, um lösbar mit dem Bolzen 30 verbunden zu werden.

In einer beispielhaften Ausführungsform schließt der Bolzen 30 eine Montagenut 33, die zum Verbinden des Verriegelungsstifts 40 konfiguriert ist. In einigen Ausführungsformen ist die Montagenut 33 am Kopf 31 des Bolzens 30 ausgebildet und erstreckt sich in axialer Richtung des Bolzens 30. Der Verriegelungsstift 40 kann konfiguriert sein, um lösbar mit der Montagenut 33 des Bolzens 30 verbunden zu werden. In einer beispielhaften Ausführungsform ist der Verriegelungsstift 40 keilförmig, und die Montagenut 33 ist keilförmig, um mit dem Verriegelungsstift 40 übereinzustimmen, das heißt, die Montagenut 33 ist in der Richtung verjüngt, die vom Schaftabschnitt 32 weg weist. Durch die keilförmige Montagenut 33 kann verhindert werden, dass sich der Verriegelungsstift 40 in axialer Richtung des Bolzens 30 von dem Verbindungsstück 20 wegbewegt.

In einer beispielhaften Ausführungsform schließt das Verbindungsstück 20 eine Verriegelungsnut 22 ein, um den Verriegelungsstift 40 teilweise aufzunehmen. Die Verriegelungsnut 22 des Verbindungsstücks 20 steht mit dem Durchgangsloch 21 in Verbindung. Es sollte beachtet werden, dass in den Figuren lediglich zwei Verriegelungsnuten 22 zur Veranschaulichung gezeigt sind. Die vorliegende Anmeldung ist jedoch nicht darauf beschränkt. Die Anzahl der Verriegelungsnuten 22 kann nach Bedarf bestimmt werden.

Während der Installation kann der Verriegelungsstift 40 von unterhalb des Kopfes 31 des Bolzens 30 in die Montagenut 33 eingesetzt werden und sich aus der oberen Öffnung der Montagenut 33 heraus erstrecken. Anschließend kann der mit dem Verriegelungsstift 40 verbundene Bolzen 30 in das Durchgangsloch 21 des Verbindungsstücks 20 und in das Befestigungsloch 12 der Innenringsektion 10 eingesetzt werden. Auf diese Weise werden der Verriegelungsstift 40 und der Kopf 31 des Bolzens 30 gemeinsam in das Durchgangsloch 21 des Verbindungsstücks 20 eingesetzt. Nachdem der Bolzen 30 festgeschraubt wurde, kann der Verriegelungsstift 40 gebogen und mindestens teilweise in der Verriegelungsnut 22 des Verbindungsstücks 20 aufgenommen werden. Sollte nach Abschluss der Installation ein Teil des Verriegelungsstifts 40 aus dem Verbindungsstück 20 hervorstehen, kann dieser beispielsweise durch Schleifen entfernt werden. Bei der Demontage können der gebogene Verriegelungsstift 40 gerade gebogen und somit der Bolzen 30 herausgeschraubt werden, sodass die Innenringsektion 10 und das Verbindungsstück 20 voneinander getrennt werden können.

Der vorstehend beschriebene Innenring 2 schließt zwei Innenringsektionen 10 ein. Die vorliegende Anmeldung ist jedoch nicht darauf beschränkt. Gemäß anderen Ausführungsformen der vorliegenden Anmeldung kann der Innenring 2 drei oder mehr Innenringsektionen einschließen, die zu einem Ring zusammengesetzt werden können.

Der Verbindungsabschnitt der Innenringsektion 10 ist wie vorstehend beschrieben als Verbindungsnut implementiert. Die vorliegende Anmeldung ist jedoch nicht darauf beschränkt. Gemäß anderen Ausführungsformen der vorliegenden Anmeldung kann der Verbindungsabschnitt der Innenringsektion 10 als flache Ebene, Vorsprung usw. implementiert sein, und das Befestigungsloch 12 kann sich von dem Verbindungsabschnitt der Innenringsektion 10 erstrecken.

Die mehreren Befestigungslöcher 12 sind wie vorstehend beschrieben gleichmäßig voneinander beabstandet. Die vorliegende Anmeldung ist jedoch nicht darauf beschränkt. In einigen Ausführungsformen können die mehreren Befestigungslöcher 12 in unregelmäßigen Abständen verteilt sein.

Die vorliegende Anmeldung wurde vorstehend anhand der beispielhaften Ausführungsformen beschrieben. Es sollte jedoch beachtet werden, dass die vorliegende Anmeldung nicht auf den Aufbau und das Verfahren der vorstehenden Ausführungsformen beschränkt ist. Stattdessen soll die vorliegende Anmeldung verschiedene Modifikationen und äquivalente Konfigurationen abdecken. Die Erfindung wird durch die angehängten Ansprüche definiert.

### Liste der Bezugszeichen

- 1: Innenring;
- 2: Außenring;
- 3: Wälzkörper;
- 10: Innenringsektion;
- 11: Verbindungsnut;
- 12: Befestigungsloch;
- 20: Verbindungsstück;
- 21: Durchgangsloch;
- 22: Verriegelungsnut;
- 30: Bolzen;
- 31: Kopf;
- 32: Schaftabschnitt;
- 33: Montagenut;
- 40: Verriegelungsstift.

## Patentansprüche

1. Lagerring (1), umfassend:
eine Vielzahl von Lagerringsektionen (10), die konfiguriert sind, um zu einem Ring verbunden zu werden, wobei jede Lagerringsektion (10) umfasst:
Verbindungsabschnitte, die sich an einer axialen Endoberfläche der Lageringsektion (10) befinden und angrenzend an Umfangsendoberflächen der Lageringsektion (10) sind; und mindestens ein Befestigungsloch (12), das sich an jedem Verbindungsabschnitt befindet und sich von dem Verbindungsabschnitt erstreckt;
eine Vielzahl von Verbindungsstücken (20), wobei jedes Verbindungsstück (20) eine Vielzahl von Durchgangslöchern (21) umfasst; und
eine Vielzahl von Bolzen (30), wobei
jedes Verbindungsstück (20) konfiguriert ist, um an den angrenzenden Verbindungsabschnitten zweier angrenzender Lagerringsektionen (10) angeordnet zu sein, wenn die Vielzahl von Lagerringsektionen (10) zusammengebaut ist, sodass die Vielzahl von Durchgangslöchern (21) des Verbindungsstücks (20) den Befestigungslöchern (12) der beiden angrenzenden Lagerringsektionen (10) entspricht; sich jedes Durchgangsloch (21) und das entsprechende Befestigungsloch (12) schräg in Bezug auf eine axiale Richtung des Lagerrings erstrecken und jeder Bolzen (30) konfiguriert ist, um in ein Durchgangsloch (21) des Verbindungsstücks (20) und das entsprechende Befestigungsloch (12) der Lagerringsektionen (10) eingesetzt zu werden, wodurch die Vielzahl von Lagerringsektionen (10) miteinander verbunden wird.

2. Lagerring (1) nach Anspruch 1, wobei jeder Verbindungsabschnitt jeder Lageringsektion (10) als eine Verbindungsnut (11) ausgeführt ist, die von der axialen Endoberfläche der Lageringsektion (10) vertieft ist, und
wobei jedes Verbindungsstück (20) konfiguriert ist, um in den angrenzenden Verbindungsnuten (12) der beiden angrenzenden Lagerringsektionen (10) angeordnet zu werden.

3. Lagerring (1) nach Anspruch 2, wobei jedes Befestigungsloch (12) der Lageringsektion (10) konfiguriert ist, um sich schräg von der entsprechenden Verbindungsnut (11) in einer Richtung zu erstrecken, die sich allmählich von der entsprechenden Umfangsendoberfläche der Lageringsektion (10) entfernt.

4. Lagerring (1) nach Anspruch 3, wobei jede Verbindungsnut (11) der Lageringsektion (10) bogenförmig ist und jedes Verbindungsstück (20) bogenförmig ist.

5. Lagerring (1) nach Anspruch 4, ferner umfassend einen Verriegelungsstift (40), der konfiguriert ist, um mit dem Bolzen (30) verbunden zu werden, wobei
das Verbindungsstück (20) eine mit seinem Durchgangsloch (21) in Verbindung stehende Verriegelungsnut (22) umfasst und der Verriegelungsstift (40) derart konfiguriert ist, dass beim Einsetzen des mit dem Verriegelungsstift (40) verbundenen Bolzens (30) in ein Durchgangsloch (21) des Verbindungsstücks (20) und die entsprechenden Befestigungslöcher (12) der Lagerringsektionen (10) mindestens ein Verriegelungsstift gebogen und mindestens teilweise in der Verriegelungsnut (22) des Verbindungsstücks (20) aufgenommen wird.

6. Lagerring (1) nach Anspruch 5, wobei der Bolzen (30) eine an einem Kopf (31) des Bolzens angeordnete und sich in axialer Richtung des Bolzens (30) erstreckende Montagenut (33) umfasst und der Verriegelungsstift (40) konfiguriert ist, um lösbar in der Montagenut (33) des Bolzens (30) verbunden zu werden.

7. Lagerring (1) nach Anspruch 6, wobei die Montagenut (33) und der Verriegelungsstift (40) aufeinander abgestimmte Keilformen aufweisen und die Keilform der Montagenut (33) konfiguriert ist, um zu verhindern, dass sich der Verriegelungsstift (40) in axialer Richtung des Bolzens (30) von dem Verbindungsstück (20) wegbewegt.

8. Lagerring (1) nach einem der Ansprüche 1 bis 7, wobei der Lagerring (1) zwei Lagerringsektionen (10) und zwei Verbindungsstücke (20) umfasst.

9. Wälzlager, umfassend den Lagerring (1) nach einem der Ansprüche 1 bis 8.

10. Wälzlager nach Anspruch 9, wobei der Lagerring (1) ein Innenring des Wälzlagers ist.

## Claims

1. A bearing ring (1) comprising:
a plurality of bearing ring sections (10) configured to be connected to form a ring, wherein each bearing ring section (10) comprises:
connection portions located on an axial end surface of the bearing ring section (10) and adjacent to circumferential end surfaces of the bearing ring section (10); and at least one fastening hole (12) located at each connection portion and extending from the connection portion;
a plurality of connecting pieces (20), each connecting piece (20) comprising a plurality of through-holes (21); and
a plurality of bolts (30), wherein
each connecting piece (20) is configured to be arranged at the adjacent connection portions of two adjacent bearing ring sections (10) when the plurality of bearing ring sections (10) is assembled, such that the plurality of through-holes (21) of the connecting piece (20) correspond to the fastening holes (12) of the two adjacent bearing ring sections (10); each through-hole (21) and the corresponding fastening hole (12) extend obliquely with respect to an axial direction of the bearing ring; and each bolt (30) is configured to be inserted into a through-hole (21) of the connecting piece (20) and the corresponding fastening hole (12) of the bearing ring sections (10), thereby connecting the plurality of bearing ring sections (10) to one another.

2. The bearing ring (1) according to claim 1, wherein each connection portion of each bearing ring section (10) is designed as a connecting groove (11) recessed from the axial end surface of the bearing ring section (10), and
wherein each connecting piece (20) is configured to be arranged in the adjacent connecting grooves (12) of the two adjacent bearing ring sections (10).

3. The bearing ring (1) according to claim 2, wherein each fastening hole (12) of the bearing ring section (10) is configured to extend obliquely from the corresponding connecting groove (11) in a direction that gradually moves away from the corresponding circumferential end surface of the bearing ring section (10).

4. The bearing ring (1) according to claim 3, wherein each connecting groove (11) of the bearing ring section (10) is arcuate and each connecting piece (20) is arcuate.

5. The bearing ring (1) according to claim 4, further comprising a locking pin (40) configured to be connected to the bolt (30), wherein
the connecting piece (20) comprises a locking groove (22) connected to its through-hole (21) and the locking pin (40) is configured such that, when the bolt (30) connected to the locking pin (40) is inserted into a through-hole (21) of the connecting piece (20) and the corresponding fastening holes (12) of the bearing ring sections (10), at least one locking pin is bent and at least partially received in the locking groove (22) of the connecting piece (20).

6. The bearing ring (1) according to claim 5, wherein the bolt (30) comprises a mounting groove (33) arranged on a head (31) of the bolt and extending in the axial direction of the bolt (30), and the locking pin (40) is configured to be detachably connected in the mounting groove (33) of the bolt (30).

7. The bearing ring (1) according to claim 6, wherein the mounting groove (33) and the locking pin (40) have matched wedge shapes and the wedge shape of the mounting groove (33) is configured to prevent the locking pin (40) from moving away from the connecting piece (20) in the axial direction of the bolt (30).

8. The bearing ring (1) according to any one of claims 1 to 7, wherein the bearing ring (1) comprises two bearing ring sections (10) and two connecting pieces (20).

9. A rolling bearing comprising the bearing ring (1) according to any one of claims 1 to 8.

10. The rolling bearing according to claim 9, wherein the bearing ring (1) is an inner ring of the rolling bearing.

## Revendications

1. Bague de roulement (1), comprenant :
une pluralité de sections (10) de bague de roulement configurées pour être assemblées afin de former une bague, dans laquelle chaque section (10) de bague de roulement comprend :
des tronçons de liaison situés sur une surface d'extrémité axiale de la section (10) de bague de roulement et adjacentes aux surfaces d'extrémité circonférentielles de la section (10) de bague de roulement ; et au moins un trou de fixation (12) situé sur chaque tronçon de liaison et s'étendant à partir du tronçon de liaison ;
une pluralité de pièces de liaison (20), dans laquelle chaque pièce de liaison (20) comprend une pluralité de trous traversants (21) ; et
une pluralité de boulons (30), dans laquelle
chaque pièce de liaison (20) est configurée pour être agencée au niveau des tronçons de liaison adjacents de deux sections (10) de bague de roulement adjacentes lorsque la pluralité de sections (10) de bague de roulement est assemblée, de telle sorte que la pluralité de trous traversants (21) de la pièce de liaison (20) corresponde aux trous de fixation (12) des deux sections (10) de bague de roulement adjacentes ; chaque trou traversant (21) et le trou de fixation (12) correspondant s'étendent obliquement par rapport à une direction axiale de la bague de roulement et chaque boulon (30) est configuré pour être inséré dans un trou traversant (21) de la pièce de liaison (20) et le trou de fixation (12) correspondant des sections (10) de bague de roulement, moyennant quoi la pluralité de sections (10) de bague de roulement sont reliées entre elles.

2. Bague de roulement (1) selon la revendication 1, dans laquelle chaque tronçon de liaison de chaque section (10) de bague de roulement est conçu comme une rainure de liaison (11) qui est en retrait par rapport à la surface d'extrémité axiale de la section (10) de bague de roulement, et
dans laquelle chaque pièce de liaison (20) est configurée pour être agencée dans les rainures de liaison (12) adjacentes des deux sections (10) de bague de roulement adjacentes.

3. Bague de roulement (1) selon la revendication 2, dans laquelle chaque trou de fixation (12) de la section (10) de bague de roulement est configuré pour s'étendre obliquement à partir de la rainure de liaison (11) correspondante dans une direction qui s'éloigne progressivement de la surface d'extrémité circonférentielle correspondante de la section (10) de bague de roulement.

4. Bague de roulement (1) selon la revendication 3, dans laquelle chaque rainure de liaison (11) de la section (10) de bague de roulement est en forme d'arc et chaque pièce de liaison (20) est en forme d'arc.

5. Bague de roulement (1) selon la revendication 4, comprenant en outre une goupille de verrouillage (40) qui est configurée pour être reliée au boulon (30), dans laquelle
la pièce de liaison (20) comprend une rainure de verrouillage (22) reliée à son trou traversant (21) et la goupille de verrouillage (40) est configurée de telle sorte que, lorsque le boulon (30) relié à la goupille de verrouillage (40) est inséré dans un trou traversant (21) de la pièce de liaison (20) et les trous de fixation (12) correspondants des sections (10) de bague de roulement, au moins une goupille de verrouillage est pliée et au moins reçue partiellement dans la rainure de verrouillage (22) de la pièce de liaison (20).

6. Bague de roulement (1) selon la revendication 5, dans laquelle le boulon (30) comprend une rainure de montage (33) agencée sur une tête (31) du boulon et s'étendant dans la direction axiale du boulon (30), et la goupille de verrouillage (40) est configurée pour être reliée de façon amovible dans la rainure de montage (33) du boulon (30).

7. Bague de roulement (1) selon la revendication 6, dans laquelle la rainure de montage (33) et la goupille de verrouillage (40) présentent des formes en coin adaptées l'une à l'autre et la forme en coin de la rainure de montage (33) est configurée pour empêcher la goupille de verrouillage (40) de s'éloigner de la pièce de liaison (20) dans la direction axiale du boulon (30).

8. Bague de roulement (1) selon l'une des revendications 1 à 7, dans laquelle la bague de roulement (1) comprend deux sections (10) de bague de roulement et deux pièces de liaison (20).

9. Palier à roulement comprenant une bague de roulement (1) selon l'une des revendications 1 à 8.

10. Palier à roulement selon la revendication 9, dans lequel la bague de roulement (1) est une bague intérieure du palier à roulement.
